(19) Europäisches Patentamt
European Patent Office
Office européen des brevets

(11) EP 3 045 045 B1

## (12) EUROPÄISCHE PATENTSCHRIFT

(45) Veröffentlichungstag und Bekanntmachung des Hinweises auf die Patenterteilung:
**12.07.2017 Patentblatt 2017/28**

(51) Int Cl.:
***A22C 25/08*** (2006.01)

(21) Anmeldenummer: **15151304.1**

(22) Anmeldetag: **15.01.2015**

(54) **VORRICHTUNG UND VERFAHREN ZUM ÜBERFÜHREN VON FISCHEN**

DEVICE AND METHOD FOR TRANSFERRING FISH

DISPOSITIF ET PROCÉDÉ DESTINÉS À TRANSFÉRER DES POISSONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.07.2016 Patentblatt 2016/29**

(73) Patentinhaber: **Nordischer Maschinenbau Rud. Baader GmbH + Co. KG**
**23560 Lübeck (DE)**

(72) Erfinder:
• **Dann, Andreas**
**DE-23569 Lübeck (DE)**
• **Grimm, Oliver**
**DE-19061 Schwerin (DE)**

(74) Vertreter: **Stork Bamberger Patentanwälte PartmbB**
**Meiendorfer Strasse 89**
**22145 Hamburg (DE)**

(56) Entgegenhaltungen:
**EP-A2- 0 384 956     DE-A1- 19 511 489**
**DE-B- 1 292 338     GB-A- 953 518**
**US-A- 2 672 647**

## Beschreibung

Die vorliegende Erfindung betrifft eine Vorrichtung sowie ein Verfahren zum Überführen von in Längsrichtung geförderten Fischen an eine Querfördereinrichtung. Des Weiteren betrifft die Erfindung eine Vorrichtung zum Überführen von Fischen an eine Fischbearbeitungsmaschine.

Derartige Vorrichtungen und Verfahren finden insbesondere bei der automatisierten Verarbeitung von Fischen, beispielsweise beim automatischen Zuführen von Fischen an eine Köpfmaschine Anwendung. Darüber hinaus sind die genannten Vorrichtungen und Verfahren grundsätzlich dazu geeignet, Fische vereinzelt und in geordneter Reihenfolge zur weiteren Bearbeitung einer Fischverarbeitungsmaschine zuzuführen.

Aus den Dokumenten DE 195 11 489 A1 und EP 0 384 956 A2 sind gattungsgemäße Einrichtungen zum geordneten Überführen von Fischen in eine Fischbearbeitungsmaschine bekannt. Die Fische werden zunächst mittels eines Zubringförderers zugefördert, verteilt und durch Entzerren der Fischmasse vereinzelt. Weiter folgt ein Längsrichten der Fische, so dass die Fische in Längsrichtung gefördert werden. Die Längsrichtung entspricht der Kopf-Schwanz-Achse der Fische, in der die Fische beim Fördern in Längsrichtung ausgerichtet sind.

Die Fische werden anschließend mit Mitteln zur Einzelentnahme taktweise in einen Querförderer mit Aufnahmeelementen in Form von Kammern oder muldenförmigen oben offenen Aufnahmebehältern gegeben. Das taktweise Eingeben der Fische in den Querförderer erfolgt zu Übergabezeitpunkten, in denen die jeweiligen Aufnahmeelemente sich in einer möglichen Übergabeposition befinden, in der das bzw. die jeweiligen Aufnahmeelemente jeweils den Mitteln zur Einzelentnahme gegenüberstehen.

Sind die Fische in die Aufnahmeelemente des Querförderers übergeben worden, werden die nächsten Fische aus den Mitteln zur Einzelentnahme, d.h. aus den Abgabeeinrichtungen, jeweils beim nächsten Takt übergeben, nämlich dann, wenn die nachfolgenden freien Aufnahmeelemente die nächsten möglichen Übergabepositionen erreicht haben. Zur Vermeidung von Wiederholungen wird im Weiteren explizit auf die Beschreibung im Dokument DE 195 11 489 A1 verwiesen, aus der die weiteren Details derartiger Vorrichtungen hervorgehen.

Das Zeitfenster zum Überführen der in Längsrichtung geförderten Fische aus den Abgabevorrichtungen an die Aufnahmeelemente des Querförderers verhält sich daher umgekehrt proportional zu der Fördergeschwindigkeit des Querförderers. Eine Steigerung der Querfördergeschwindigkeit führt daher zu einem sich entsprechend verkleinernden Zeitfenster, innerhalb dessen die Überführung der Fische stattfindet, mit der Folge, dass mit steigender Querfördergeschwindigkeit immer größere Beschleunigungswerte erforderlich sind, um die Fische aus den Abgabeeinrichtungen in die Aufnahmeelemente des Querförderers in diesem Zeitfenster überführen zu können. Die maximal erzielbaren Beschleunigungswerte sind jedoch aufgrund der Massenträgheit der Fische sowie der begrenzten Möglichkeit der Übertragung derart hoher Beschleunigungswerte auf die Fische nach oben begrenzt.

Die aus dem Stand der Technik bekannten Vorrichtungen und Verfahren weisen daher den Nachteil auf, dass die maximal erzielbare Fördergeschwindigkeit des Querförderers aufgrund der genannten Gegebenheiten beschränkt ist, da eine obere Grenze für die Fördergeschwindigkeit existiert, die nicht überschritten werden kann.

Ein weiterer Nachteil der bekannten Einrichtungen und Verfahren besteht darin, dass die Querfördereinrichtung sowie die Beschleunigungseinrichtungen starr miteinander gekoppelt sind, so dass die für eine zuverlässige Übergabe erforderlichen Beschleunigungen nur erreicht werden können, sofern die Fördergeschwindigkeit der Querfördereinrichtung innerhalb bestimmter Grenzwerte liegt. So wird einerseits bei einer zu geringen Fördergeschwindigkeit die für eine zuverlässige Übergabe der Fische mindestens erforderliche Auswurfgeschwindigkeit nicht erreicht. Anderseits führt eine zu hohe Fördergeschwindigkeit zu einer Überschreitung der zuvor beschriebenen maximal zulässigen Beschleunigungswerte.

Es ist daher Aufgabe der vorliegenden Erfindung, Vorrichtungen und ein Verfahren der eingangs genannten Art bereitzustellen, die eine automatische Überführung der Fische aus der Längsrichtung an eine Querfördereinrichtung bei beliebiger Querfördergeschwindigkeit mit gesteigerter Zuverlässigkeit erlauben.

Gelöst wird die Aufgabe durch die eingangs genannte Vorrichtung, wobei die Querfördereinrichtung eine Vielzahl von einen Querförderer bildenden Aufnahmeelementen zur Einzelaufnahme der überführten Fische sowie ein zum kontinuierlichen Fördern der Aufnahmeelemente an dem Querförderer angeordnetes Antriebsmittel umfasst, und in einem Übergabebereich eine Anzahl m von mindestens zwei jeweils äquidistant beabstandeten Abgabeeinrichtungen zum Überführen der Fische in die Aufnahmeelemente angeordnet sind, deren mittlerer Abstand mindestens der Breite einer Anzahl n von mindestens zwei der Aufnahmeelemente entspricht, weiter umfassend jeder der Abgabeeinrichtungen zugeordnete Zuführeinrichtungen, die zum Zuführen der Fische in Längsrichtung an die Abgabeeinrichtungen ausgebildet und eingerichtet sind und eine mit dem Antriebsmittel und den Abgabeeinrichtungen verbundene Steuereinrichtung, wobei die Steuereinrichtung zum Ansteuern der Abgabeeinrichtungen derart ausgebildet und eingerichtet ist, dass die in den Abgabeeinrichtungen vorgehaltenen Fische in die sich in einer Übergabeposition befindenden Aufnahmeelemente zu vorgegebenen Übergabezeitpunkten zeitgleich überführt werden, wobei das Überführen mittels der Steuereinrichtung zyklisch intermittierend ausgeführt wird, in dem der zeitliche Abstand zwischen jeweils zwei aufeinanderfolgenden der Übergabezeitpunkte mindestens n+1 Fördertakte beträgt, wobei ein Fördertakt die Zeitspanne umfasst, um die Aufnahmeelemente um die Breite eines der Aufnahmeelemente zu fördern.

So wird einerseits erreicht, die Aufnahmeelemente des Querförderers weitestgehend lückenlos mit überführten Fischen zu beschicken, zugleich aber den zeitlichen Abstand zwischen jeweils aufeinanderfolgenden der Übergabezeitpunkte zu maximieren. Auf diese Weise wird stets ein zuverlässiges Überführen der Fische bei beliebigen Querfördergeschwindigkeiten erreicht.

Gemäß einer vorteilhaften Weiterbildung der Erfindung ist vorgesehen, dass die Steuereinrichtung zum Ansteuern der Abgabeeinrichtung einen ersten Taktgeber und einen zweiten Taktgeber umfasst, die derart ausgebildet und eingerichtet sind, dass das Überführen alternierend mit einem ersten zeitlichen Abstand und einem zweiten zeitlichen Abstand zwischen jeweils aufeinanderfolgenden der Übergabezeitpunkte ausgeführt wird, wobei der erste Taktgeber angepasst ist, den ersten zeitlichen Abstand mit n+1 Fördertakten vorzugeben, und der zweite Taktgeber angepasst ist, den zweiten zeitlichen Abstand mit n·(m-1)-1 Fördertakten vorzugeben. Dies bietet den Vorteil, dass der zeitliche Abstand zwischen jeweils aufeinanderfolgenden Übergabezeitpunkten bei verschiedenen Konfigurationen der erfindungsgemäßen Vorrichtung jeweils maximiert wird. Vorteilhafter Weise sind der erste und zweite Taktgeber als Teile eines Steuerprogramms der Steuereinrichtung ausgebildet. Eine bevorzugte Weiterbildung der Erfindung zeichnet sich dadurch aus, dass die Abgabeeinrichtungen Beschleunigungseinheiten zum Beschleunigen der vorgehaltenen Fische umfassen und die Steuereinrichtung mit mindestens einem Positionsgeber zum Bestimmen der Position mindestens eines der Aufnahmeelemente verbunden ist und ferner Steuermittel umfasst, die zum Ermitteln des Zeitvorlaufs zum Beschleunigen der in den Abgabevorrichtungen vorgehaltenen Fischen mittels der Beschleunigungseinheiten auf Basis der Position des Aufnahmeelements ausgebildet und eingerichtet sind, sowie, dass die Steuereinrichtung eine Beschleunigungssteuerungseinrichtung umfasst, die mit den Beschleunigungseinheiten verbunden ist und diese derart ansteuert, dass die vorgehaltenen Fische unter Berücksichtigung des Zeitvorlaufs beschleunigt werden und zum jeweiligen Übergabezeitpunkt eine vorgegebene Auswurfgeschwindigkeit erreichen. Vorteilhafter Weise wird so einerseits der jeweils zum Beschleunigen der Fische zur Verfügung stehende Zeitraum optimal ausgenutzt, so dass die Momentanbeschleunigung möglichst niedrig gehalten werden kann. Zum anderen werden die Fische nur auf diejenige vorgegebene Auswurfgeschwindigkeit beschleunigt, die ein zuverlässiges Überführen der Fische vom Verlassen der Abgabeeinrichtung bis zur sicheren Aufnahme in den Aufnahmeeinrichtungen gewährleistet. Besonders bevorzugt umfassen die Beschleunigungseinheiten einen Servomotor als Antrieb. Die Beschleunigungseinheiten sind auf diese Weise vollständig mechanisch von der Querfördereinrichtung entkoppelt, so dass der Beschleunigungsvorgang der Fische unabhängig von der Fördergeschwindigkeit des Querförderers ist. Weiter bevorzugt ist die Beschleunigungssteuerungseinrichtung zum Vorgeben der Beschleunig angepasst, die Drehzahl der Servomotors zu steuern.

Gemäß einer weiteren vorteilhaften Ausgestaltung der Erfindung ist in der Beschleunigungssteuerungseinrichtung ein vorgegebenes Beschleunigungsprofil hinterlegt und die Beschleunigungssteuerungseinrichtung ist eingerichtet, die Beschleunigungseinheiten gemäß dem vorgegebenen Beschleunigungsprofil anzusteuern. Dies bietet den Vorteil, dass die Beschleunigung der in den Abgabeeinrichtungen vorgehaltenen Fische nicht zwingend mit konstanter Beschleunigung erfolgt, sondern das Beschleunigungsprofil beliebig anpassbar eingerichtet ist. Beispielsweise werden zu Beginn der Beschleunigungsphase mittels des Beschleunigungsprofils vorzugsweise vergleichsweise niedrige Beschleunigungswerte vorgegeben, um den jeweiligen Fisch sicher mit der jeweiligen Beschleunigungseinheit zu erfassen und bis zur Überwindung der Haftreibungskräfte entsprechend schonend zu beschleunigen. Auch ist es möglich, die Fische auf eine vorgegebene maximale Geschwindigkeit zu beschleunigen und kurz vor dem Erreichen des jeweiligen Übergabezeitpunkts die Momentangeschwindigkeit zu reduzieren, um die Fische aus den Beschleunigungseinheiten freizugegeben.

Eine weitere bevorzugte Ausführungsform der Erfindung sieht vor, dass der zeitliche Verlauf des Beschleunigungsprofils vom Beginn des Beschleunigens der vorgehaltenen Fische bis zum Erreichen der Auswurfgeschwindigkeit monoton oder streng monoton steigend ist. Auf diese Weise kann die vorgegebene Auswurfgeschwindigkeit in möglichst kurzer Zeit, trotz der zu Beginn der Beschleunigungsphase verhältnismäßig niedrigen Beschleunigungswerten erreicht werden, so dass der Beschleunigungsvorgang insgesamt möglichst wenig Zeit benötigt und stets ein zuverlässiges Überführen der Fische bei beliebigen Querfördergeschwindigkeiten erreicht wird.

Die Aufgabe wird auch durch eine Vorrichtung zum Überführen von Fischen in eine Fischbearbeitungsmaschine gelöst, wobei die Vorrichtung ein Zuführmittel zum Zuführen einer Vielzahl ungeordneter Fische, Mittel zum Längsrichten der Fische und Fördern der Fische in Längsrichtung, eine Vorrichtung zum Überführen der in Längsrichtung geförderten Fischen an eine Querfördereinrichtung gemäß einem der Ansprüche 1 bis 5 umfasst, wobei die Querfördereinrichtung die Fischzuführung der Fischbearbeitungsmaschine bildet. Mit anderen Worten ist die eingangs beschriebene Vorrichtung nach einem der Ansprüche 1 bis 5 Bestandteil einer Fischverarbeitungslinie, wobei die Querfördereinrichtung die Fische vereinzelt und in definierter Lage mittels der Aufnahmeelemente der Fischbearbeitungsmaschine zuführt. Aufgrund der eingangs genannten Vorteile der erfindungsgemäßen Vorrichtung gemäß einem der Ansprüche 1 bis 5 kann die Fischbearbeitungsmaschine gegenüber den aus dem Stand der Technik bekannten Fischbearbeitungsmaschinen wesentlich mehr Fische pro Zeiteinheit verarbeiten, da die Querfördereinrichtung nun erstmals mit deutlich höheren Fördergeschwindigkeiten betrieben werden kann.

Des Weiteren wird die Aufgabe durch das eingangs genannte Verfahren gelöst, wobei die Querfördereinrichtung eine Vielzahl von einen Querförderer bildenden Aufnahmeelementen zur Einzelaufnahme der überführten Fische umfasst und in einem Übergabebereich eine Anzahl m von mindestens zwei jeweils äquidistant beabstandeten Abgabeeinrichtungen zum Überführen der Fische in die Aufnahmeelemente angeordnet sind, deren mittlerer Abstand mindestens der Breite einer Anzahl n von mindestens zwei der Aufnahmeelemente entspricht, und folgende Schritte umfasst: Zuführen einer Anzahl m von mindestens zwei der Fische durch Fördern der Fische in Längsrichtung an die jeweiligen Abgabeeinrichtungen, kontinuierliches Fördern der Aufnahmeelemente in eine Querförderrichtung, zeitgleiches Überführen der in den Abgabeeinrichtungen vorgehaltenen Fische in die sich in einer Übergabeposition befindenden Aufnahmeelemente zu vorgegebenen Übergabezeitpunkten, wobei ein Fördertakt die Zeitspanne umfasst, um die Aufnahmeelemente um die Breite eines der Aufnahmeelemente zu fördern, wobei das Überführen zyklisch intermittierend ausgeführt wird, in dem der zeitliche Abstand zwischen jeweils aufeinanderfolgenden Übergabezeitpunkten mindestens n+1 Fördertakte beträgt.

Eine bevorzugte Weiterbildung des Verfahrens zeichnet sich dadurch aus, dass das Überführen alternierend mit einem ersten zeitlichen Abstand und einem zweiten zeitlichen Abstand zwischen jeweils aufeinanderfolgenden der Übergabezeitpunkte ausgeführt wird, wobei der erste zeitliche Abstand n+1 Fördertakte und der zweite zeitliche Abstand n·(m-1)-1 Fördertakte beträgt.

Gemäß einer vorteilhaften Weiterbildung der Erfindung umfasst das Verfahren die folgenden weiteren Schritte: Bestimmen der Position mindestens eines der Aufnahmeelemente, Ermitteln des Zeitvorlaufs zum Beschleunigen der in den Abgabevorrichtungen vorgehaltenen Fische auf Basis der Position des Aufnahmeelements, Beschleunigen der vorgehaltenen Fische unter Berücksichtigung des Zeitvorlaufs derart, dass diese zu dem jeweiligen Übergabezeitpunkt eine vorgegebene Auswurfgeschwindigkeit erreichen.

Bevorzugt erfolgt das Beschleunigen der vorgehaltenen Fische mittels eines vorgegebenen Beschleunigungsprofils.

Weiter bevorzugt ist der zeitliche Verlauf des Beschleunigungsprofils vom Beginn des Beschleunigens der vorgehaltenen Fische bis zum Erreichen der Auswurfgeschwindigkeit monoton oder streng monoton steigend.

Zur Vermeidung von Wiederholungen wird im Hinblick auf die sich aus dem erfindungsgemäßen Verfahren ergebenden Vorteile auf die entsprechenden Textpassagen im Zusammenhang mit der erfindungsgemäßen Vorrichtung verwiesen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:

Fig. 1    eine perspektivische Ansicht eines Ausführungsbeispiels der erfindungsgemäßen Vorrichtung in Kombination mit einer Fischbearbeitungsmaschine,

Fig. 2    eine schematische Darstellung von Abgabeeinrichtungen und Querförderer gemäß einem ersten Ausführungsbeispiel

und

Fig. 3    eine schematische Darstellung von Abgabeeinrichtungen und Querförderer gemäß einem zweiten Ausführungsbeispiel.

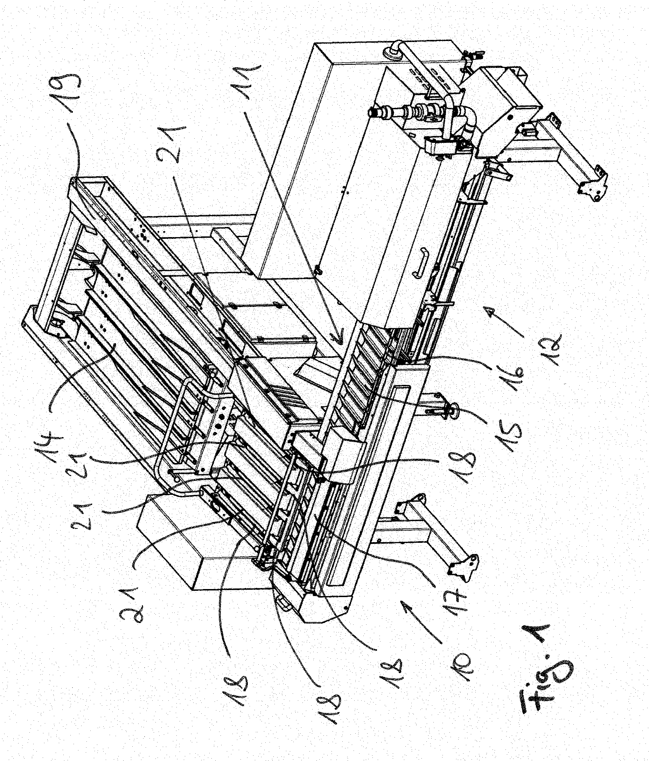

In der Figur 1 ist eine beispielhafte Ausführung der erfindungsgemäßen Vorrichtung 10 zum Überführen von in Längsrichtung geförderten Fischen an eine Querfördereinrichtung 11 gezeigt. Überdies ist in der Figur 1 beispielhaft die eingangs genannte Vorrichtung zum Überführen von Fischen in eine Fischbearbeitungsmaschine 12 gezeigt. Die Fischbearbeitungsmaschine 12 ist vorzugsweise als Köpfmaschine zum Köpfen der Fische ausgebildet und eingerichtet. Die vorliegende Erfindung ist jedoch nicht nur auf die Zuführung von Fischen mittels der Querfördereinrichtung 11 im Zusammenhang mit Köpfmaschinen beschränkt, sondern ist generell auch für andere Fischbearbeitungsmaschinen 12 geeignet.

Die - in der Zeichnung nicht gezeigten - zunächst ungeordneten Fische werden über entsprechend eingerichtete Zuführmittel Mitteln 14 zum Längsrichten zugeführt. Die Mittel 14 zum Längsrichten sind zugleich zum Fördern der Fische in Längsrichtung ausgebildet. Die Längsrichtung der Fische erstreckt sich vom Kopf zum Schwanz. Besonders bevorzugt werden die Fische Kopf voraus in der Längsrichtung gefördert.

Mittels der im Folgenden näher erläuterten Vorrichtung 10 zum Überführen der Fische an die Querfördereinrichtung 11 werden die Fische an diese überführt. Vorzugsweise bildet die Querfördereinrichtung 11 die Fischzuführung zu der Fischbearbeitungsmaschine 12.

Die Querfördereinrichtung 11 umfasst eine Vielzahl von Aufnahmeelementen 15. Die Aufnahmeelemente 15 sind zur Einzelaufnahme der Fische ausgebildet und eingerichtet. Bevorzugt sind die Aufnahmeelemente 15 muldenförmig ausgebildet. Die Aufnahmeelemente 15 bilden einen Querförderer 16, der vorzugsweise als umlaufender Endlosförderer ausgebildet ist.

An dem Querförderer 16 ist ein - in der Zeichnung nicht gezeigtes - Antriebsmittel angeordnet, mittels dessen der Querförderer 16 kontinuierlich angetrieben wird. Mit anderen Worten ist die Querfördereinrichtung 11 derart ausgebildet, dass die Aufnahmeelemente 15, zumindest im stationären Betrieb, mit konstanter Geschwindigkeit gefördert werden.

In einem Übergabebereich 17 sind mindestens zwei Abgabeeinrichtungen 18 angeordnet. Die Anzahl der Abgabeeinrichtungen 18 wird mit m bezeichnet. Die Abgabeeinrichtungen 18 sind äquidistant zueinander beabstandet angeordnet und münden jeweils in die Aufnahmeelemente 15. Der mittlere Abstand der Abgabeeinrichtungen 18 zueinander beträgt mindestens die n-fache Breite der Aufnahmeelemente 15. Mit anderen Worten sind die Positionen der Abgabeeinrichtungen 18 und die Breite der Aufnahmeelemente 15 derart gewählt, dass jeweils zwischen zwei benachbarten Abgabeeinrichtung 18 insgesamt n Aufnahmeelemente 15 Raum finden. Die Zahl n bezeichnet daher die Anzahl der Aufnahmeelemente 15 pro Abgabeeinrichtung 18, während die Zahl m die Gesamtzahl der Abgabeeinrichtungen 18 bezeichnet.

Bevorzugt ist jeder der Abgabeeinrichtung 18 eine Zuführeinrichtung 19 zugeordnet. Die Zuführeinrichtungen 19 umfassen vorteilhafter Weise die eingangs genannten Zuführmittel. Die Zuführeinrichtungen 19 sind zum Zuführen der Fische in Längsrichtung an die Abgabeeinrichtungen 18 ausgebildet.

Ferner umfasst die erfindungsgemäße Vorrichtung 10 eine - in den Figuren nicht gezeigte - Steuereinrichtung. Die Steuereinrichtung ist vorzugsweise eine mikroprozessorbasierte Steuerung. Die Steuereinrichtung ist mit dem Antriebsmittel sowie den Abgabeeinrichtungen 18 verbunden und zum Ansteuern der Abgabeeinrichtungen 18 ausgebildet und eingerichtet. Vorzugweise ist die Steuereinrichtung ferner ausgebildet, die Fördergeschwindigkeit des Querförderers 16 vorzugeben.

Die Steuereinrichtung ist ferner angepasst, die in den Abgabeeinrichtungen 18 jeweils vorgehaltenen Fische in die Aufnahmeelemente 15 zu überführen, in dem die vorgehaltenen Fische zu vorgegebenen Übergabezeitpunkten aus den Abgabeeinrichtungen 18 in die Aufnahmeelemente 15 unter Kontrolle durch die Steuereinrichtung überführt werden, sofern sich die Aufnahmeelemente 15 in einer geeigneten Übergabeposition befinden.

Mittels der Steuereinrichtung wird das Überführen einerseits zyklisch, d.h. sich wiederholend, als auch andererseits intermittierend ausgeführt. Das Überführen erfolgt daher nicht bei jedem möglichen Übergabezeitpunkt, in dem sich die Aufnahmeelemente 15 in einer der Übergabepositionen befinden, sondern jeweils mit einem größeren zeitlichen Abstand. Dieser zeitliche Abstand zwischen jeweils zwei aufeinanderfolgenden der Übergabezeitpunkte beträgt mindestens n+1 Fördertakte 20. Ein Fördertakt 20 umfasst dabei die Zeitspanne, um die Aufnahmeelemente 15 um die Breite eines der Aufnahmeelemente 15 zu fördern. Innerhalb eines Fördertaktes 20 rücken die Aufnahmeelemente 15 daher gerade um ihre eigene Breite vor

Besonders bevorzugt sind die Abgabeeinrichtungen 18 sowie die Steuereinrichtung derart eingerichtet, dass das Überführen der in den Abgabeeinrichtungen 18 jeweils vorgehaltenen Fische zeitgleich erfolgt. Mit anderen Worten werden in jeweils m der n Aufnahmeelemente 15 die Fische zeitgleich überführt.

Vorteilhafter Weise umfasst die Steuereinrichtung einen ersten Taktgeber und einen zweiten Taktgeber zum Ansteuern der Abgabeeinrichtungen 18. Der erste und zweite Taktgeber sind derart eingerichtet, dass das Überführen der Fische alternierend mit einem ersten zeitlichen Abstand und einem zweiten zeitlichen Abstand zwischen jeweils aufeinanderfolgenden der Übergabezeitpunkte ausgeführt wird. Hierzu ist der erste Taktgeber angepasst, den ersten zeitlichen Abstand mit n+1 Fördertakten 20 vorzugeben. Der zweite Taktgeber ist entsprechend angepasst, den zweiten zeitlichen Abstand mit $n \cdot (m-1)-1$ Fördertakten 20 vorzugeben.

Anders ausgedrückt sind die Taktgeber derart eingerichtet, dass nach einem Überführen der Fische aus den Abgabeeinrichtungen 18 zunächst n+1 Fördertakte 20 vergehen, in denen kein weiteres Überführen der Fische stattfindet. Nach Ablauf der n+1 Fördertakte 20 initiiert der zweite Taktgeber der Steuereinrichtung die nächstfolgende Überführung der Fische aus den Abgabeeinrichtungen 18 in die freien Aufnahmeelemente 15. Es folgen $n \cdot (m-1)-1$ überführungsfreie Fördertakte 20, bevor der Zyklus von neuem beginnt.

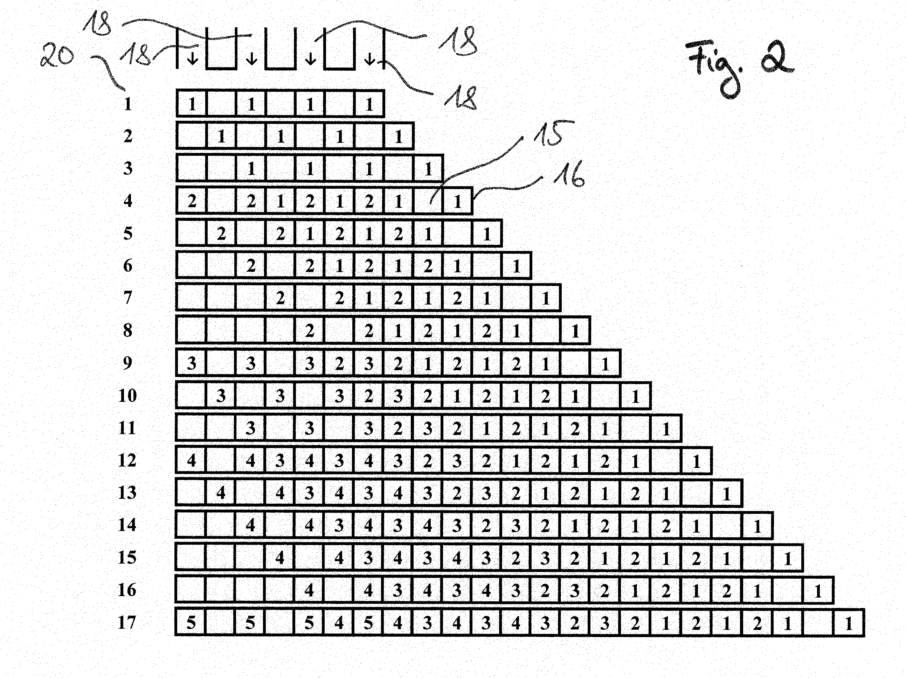

In der Figur 2 ist eine schematische Darstellung der Abgabeeinrichtungen 18 und des Querförderers 16 gemäß einem ersten Ausführungsbeispiel gezeigt. Gemäß dieser vorteilhaften Ausbildung sind in dem Übergabebereich 17 eine Anzahl von m gleich vier der Abgabeeinrichtungen 18 angeordnet. Der Abstand zwischen jeweils zwei der Abgabeeinrichtungen 18 beträgt das Doppelte der Breite der Aufnahmeelemente 15. Die Anzahl n der Aufnahmeelemente 15 beträgt daher zwei. Die Fördertakte 20 sind zur Verdeutlichung zeilenweise von 1 bis 17 durchnummeriert. Zur Vereinfachung der Darstellung wird im Folgenden im Wesentlichen das erfindungsgemäße Verfahren beschrieben. Die Ausführungen gelten jedoch in analoger Weise zur Beschreibung der erfindungsgemäßen Steuereinrichtung sowie der erfindungsgemäßen Vorrichtungen.

Zunächst wird jedes der sich in den Übergabepositionen befindende der Aufnahmeelemente 15 mit den in den Abgabeeinrichtungen 18 vorgehaltenen Fischen durch Überführen gefüllt und anschließend um die Breite eines der Aufnahmeelemente 15 in Förderrichtung des Querförderers, d.h. in Figur 2 nach rechts, durch kontinuierliches Fördern weiterbewegt. Im ersten Fördertakt 20 sind in der Figur 2 die mit Fischen gefüllten Aufnahmeelemente 15 mit der Ziffer Eins gekennzeichnet. In den gezeigten zwei weiteren Fördertakten 20 mit den Ziffern Zwei und Drei, werden die Aufnahmeelemente 15 kontinuierlich weitergefördert, bevor im vierten Fördertakt 20 zum zweiten Mal, die mit der Ziffer Zwei gekennzeichneten Fische in die Aufnahmeelemente 15 überführt werden. Es folgen, den vierten Fördertakt 20 mitgerechnet, insgesamt fünf Fördertakte 20, bis zum Überführen der mit Ziffer Drei gekennzeichneten Fische. Hier beginnt der Ablauf in zyklischer Weise von neuem.

Erfindungsgemäß führt das alternierende Überführen mit einem ersten zeitlichen Abstand von n+1 = 3 Fördertakten 20 und einem zweiten zeitlichen Abstand von

$$n \cdot (m-1)-1 = 2 \cdot (4-1)-1 = 5$$

Fördertakten mittels der ersten und zweiten Taktgeber der Steuereinrichtung, mit Ausnahme der Startphase, zu einer lückenfreien Füllung der Aufnahmeelemente 15 des Querförderers 16.

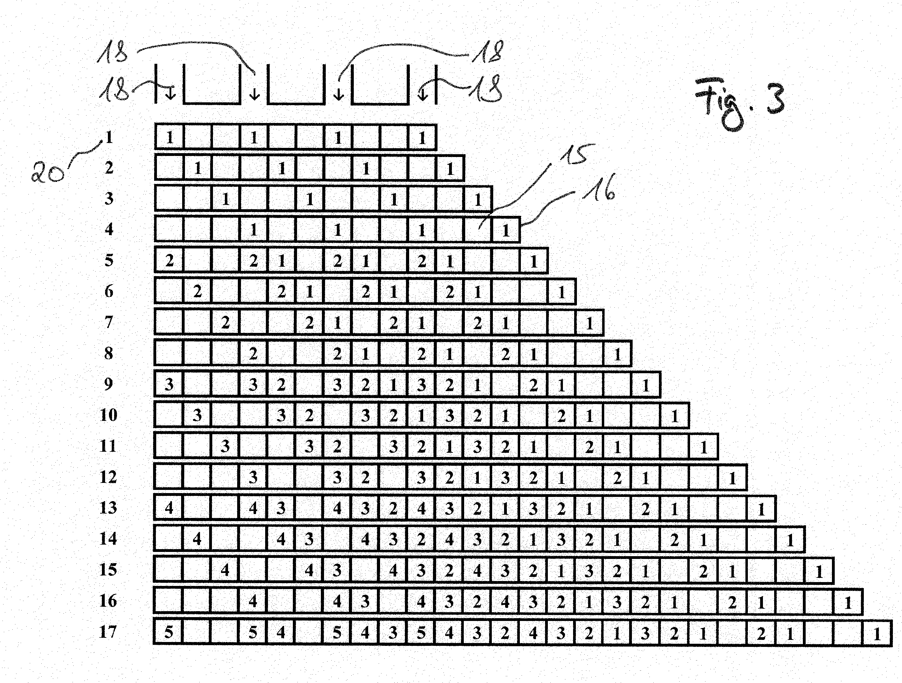

Ein weiteres bevorzugtes Ausführungsbeispiel ist in der Figur 3 gezeigt. Die Darstellung der Figur 3 entspricht im Wesentlichen der Figur 2, jedoch mit dem Unterschied, dass der Abstand zwischen jeweils zwei der Abgabeeinrichtungen 18 das Dreifache der Breite der Aufnahmeelemente 15 beträgt. Die Anzahl n der Aufnahmeelemente 15 beträgt daher drei. Der zeitliche Abstand ergibt sich zu

$$n+1 = 3+1 = 4$$

der Fördertakte 20. Wie der Figur 3 zu entnehmen ist, ergibt sich, mit Ausnahme der Startphase, eine lückenfreie Füllung der Aufnahmeelemente 15 des Querförderers, sofern das Überführen der Fische aus den Abgabeeinrichtungen 18 jeden vierten Fördertakt erfolgt.

Alternativ ist es auch möglich, das Überführen alternierend auszuführen. In diesem Fall beträgt der erste zeitliche Abstand n+1 = 4 der Fördertakte 20, während der zweite zeitliche Abstand

$$n \cdot (m-1)-1 = 3 \cdot (4-1)-1 = 8$$

der Fördertakte 20 beträgt. Bei dieser in den Figuren nicht gezeigten alternativen Ausführungsform, bleiben einige der Aufnahmeelemente 15 leer, so dass die Aufnahmeelemente 15 des Querförderers nicht lückenlos gefüllt sind.

Die zuvor beschriebenen Ausführungsbeispiele sind nicht abschließend, sondern dienen ausschließlich der exemplarischen Verdeutlichung der erfindungsgemäßen Vorrichtungen sowie des erfindungsgemäßen Verfahrens. Die vorliegende Erfindung umfasst folglich sämtliche Vorrichtungen und Verfahren, bei denen eine Anzahl m von mehr als zwei Abgabeeinrichtungen 18 sowie eine Anzahl von zwei oder mehr der Aufnahmeelemente 15 pro Abgabeeinrichtung 18 vorgesehen sind.

Weiter bevorzugt umfassen die Abgabeeinrichtungen 18 Beschleunigungseinheiten 21. Die Beschleunigungseinheiten 21 sind zum Beschleunigen der in den Abgabeeinrichtungen 18 vorgehaltenen Fische ausgebildet und eingerichtet. Beispielsweise umfassen die Beschleunigungseinheiten umlaufende Förderbänder mit Mitnehmern, die zum Beschleunigen der Fische in diese eingreifen. Wie eingangs beschrieben ist es besonders vorteilhaft, die Fische auf eine vorgegebene maximale Geschwindigkeit zu beschleunigen und vor dem Erreichen des jeweiligen Übergabezeitpunkts die Momentangeschwindigkeit zu reduzieren, also die Geschwindigkeit der Mitnehmer entsprechend zu verringern. Die Fische gleiten aufgrund ihrer Massenträgheit im Wesentlichen mit der vorgegebenen maximalen Geschwindigkeit weiter. Aufgrund der im Vergleich zu den Fischen reduzierten Momentangeschwindikeit der Mitnehmer wird die Verbindung von Mitnehmer und Fisch weitestgehend kräftefrei gelöst und der Fisch entsprechend schonend aus der jeweiligen Beschleunigungseinheit freigegeben.

Die Steuereinrichtung umfasst vorteilhafter Weise mindestens einen Positionsgeber. Der Positionsgeber ist zum Bestimmen der Position mindestens eines der Aufnahmeelemente 18 mit der Steuereinrichtung verbunden.

Die Steuereinrichtung umfasst weiter bevorzugt Steuermittel, die zum Ermitteln des Zeitvorlaufs zum Beschleunigen der in den Abgabeeinrichtungen 18 vorgehaltenen Fische mittels der Beschleunigungseinheiten ausgebildet und eingerichtet sind. Die Steuermittel sind derart ausgebildet, dass diese unter Berücksichtigung der mittels des Positionsgebers bestimmten Position der Abgabeeinrichtung 18 den Zeitvorlauf bestimmen, der erforderlich ist, um die vorgehaltenen Fische auf die zum Überführen in die Aufnahmeelemente 15 erforderliche Endgeschwindigkeit zu beschleunigen.

Die Beschleunigungseinheiten 21 sind bevorzugt mit einer Beschleunigungssteuerungseinrichtung verbunden. Diese ist zum Ansteuern der Beschleunigungseinheiten 21 derart ausgebildet, das die vorgehaltenen Fische unter Berücksichtigung des mittels der Steuermittel ermittelten Zeitvorlaufs beschleunigt werden und zu einem der jeweiligen Übergabezeitpunkte eine vorgegebene Auswurfgeschwindigkeit erreichen.

Besonders bevorzugt ist in der Beschleunigungssteuerungseinrichtung ein vorgegebenes Beschleunigungsprofil hinterlegt. Beispielsweise ist der qualitative zeitliche Verlauf der mittels der Beschleunigungseinheiten auf die vorgehaltenen Fische einwirkenden Beschleunigung als das Beschleunigungsprofil hinterlegt. Die zu erreichende Maximalbeschleunigung wird durch die ermittelte vorgegebene Auswurfgeschwindigkeit festgelegt.

Weiter bevorzugt ist der zeitliche Verlauf des Beschleunigungsprofils vom Beginn des Beschleunigens der vorgehaltenen Fische bis zum Erreichen der Auswurfgeschwindigkeit monoton oder streng monoton steigend.

**Patentansprüche**

1. Vorrichtung (10) zum Überführen von in Längsrichtung geförderten Fischen an eine Querfördereinrichtung (11),
   wobei die Querfördereinrichtung (11) eine Vielzahl von einen Querförderer (16) bildenden Aufnahmeelementen (15) zur Einzelaufnahme der überführten Fische sowie ein zum kontinuierlichen Fördern der Aufnahmeelemente (15) an dem Querförderer (16) angeordnetes Antriebsmittel umfasst, und
   in einem Übergabebereich (17) eine Anzahl m von mindestens zwei jeweils äquidistant beabstandeten Abgabeeinrichtungen (18) zum Überführen der Fische in die Aufnahmeelemente (15) angeordnet sind, deren mittlerer Abstand mindestens der Breite einer Anzahl n von mindestens zwei der Aufnahmeelemente (15) entspricht,
   weiter umfassend
   jeder der Abgabeeinrichtungen (18) zugeordnete Zuführeinrichtungen (19), die zum Zuführen der Fische in Längsrichtung an die Abgabeeinrichtungen (18) ausgebildet und eingerichtet sind und
   eine mit dem Antriebsmittel und den Abgabeeinrichtungen (18) verbundene Steuereinrichtung, wobei die Steuereinrichtung zum Ansteuern der Abgabeeinrichtungen (18) derart ausgebildet und eingerichtet ist, dass die in den Abgabeeinrichtungen (18) vorgehaltenen Fische in die sich in einer Übergabeposition befindenden Aufnahmeelemente (15) zu vorgegebenen Übergabezeitpunkten zeitgleich überführt werden, wobei das Überführen mittels der Steuereinrichtung zyklisch intermittierend ausgeführt wird, in dem der zeitliche Abstand zwischen jeweils zwei aufeinanderfolgenden der Übergabezeitpunkte mindestens n+1 Fördertakte (20) beträgt, wobei ein Fördertakt (20) die Zeitspanne umfasst, um die Aufnahmeelemente (15) um die Breite eines der Aufnahmeelemente (15) zu fördern.

2. Vorrichtung nach Anspruch 1, **dadurch gekennzeichnet, dass** die Steuereinrichtung zum Ansteuern der Abgabeeinrichtungen (18) einen ersten Taktgeber und einen zweiten Taktgeber umfassen, die derart ausgebildet und eingerichtet sind, dass das Überführen alternierend mit einem ersten zeitlichen Abstand und einem zweiten zeitlichen Abstand zwischen jeweils aufeinanderfolgenden der Übergabezeitpunkte ausgeführt wird, wobei der erste Taktgeber angepasst ist, den ersten zeitlichen Abstand mit n+1 Fördertakten (20) vorzugeben und der zweite Taktgeber angepasst ist, den zweiten zeitlichen Abstand mit n·(m-1)-1 Fördertakten (20) vorzugeben.

3. Vorrichtung nach einem der vorangehenden Ansprüche, **dadurch gekennzeichnet, dass** die Abgabeeinrichtungen (18) Beschleunigungseinheiten (21) zum Beschleunigen der vorgehaltenen Fische umfassen und
   die Steuereinrichtung mit mindestens einem Positionsgeber zum Bestimmen der Position mindestens eines der Aufnahmeelemente (15) verbunden ist, und ferner
   Steuermittel umfasst, die zum Ermitteln des Zeitvorlaufs zum Beschleunigen der in den Abgabeeinrichtungen (18) vorgehaltenen Fischen mittels der Beschleunigungseinheiten auf Basis der Position des Aufnahmeelementes (15) ausgebildet und eingerichtet sind sowie, dass
   die Steuereinrichtung eine Beschleunigungssteuerungseinrichtung umfasst, die mit den Beschleunigungseinheiten verbunden ist und diese derart ansteuert, dass die vorgehaltenen Fische unter Berücksichtigung des Zeitvorlaufs beschleunigt werden und zum jeweiligen Übergabezeitpunkt eine vorgegebene Auswurfgeschwindigkeit erreichen.

4. Vorrichtung nach einem der vorangehenden Ansprüche, **dadurch gekennzeichnet, dass** in der Beschleunigungssteuerungseinrichtung ein vorgegebenes Beschleunigungsprofil hinterlegt ist und die Beschleunigungssteuerungseinrichtung eingerichtet ist, die Beschleunigungseinheiten gemäß dem vorgegebenen Beschleunigungsprofil anzusteuern.

5. Vorrichtung nach Anspruch 4, **dadurch gekennzeichnet, dass** der zeitliche Verlauf des Beschleunigungsprofils vom Beginn des Beschleunigens der vorgehaltenen Fische bis zum Erreichen der Auswurfgeschwindigkeit monoton oder streng monoton steigend ist.

6. Vorrichtung zum Überführen von Fischen in eine Fischbearbeitungsmaschine (12), umfassend, ein Zuführmittel zum Zuführen einer Vielzahl ungeordneter Fische, Mittel (14) zum Längsrichten der Fische und Fördern der Fische in Längsrichtung, eine Vorrichtung (10) zum Überführen der in Längsrichtung geförderten Fischen an eine Querfördereinrichtung (11) gemäß einem der Ansprüche 1 bis 5, wobei die Querfördereinrichtung (11) die Fischzuführung der Fischbearbeitungsmaschine (12) bildet.

7. Verfahren zum Überführen von in Längsrichtung geförderten Fischen an eine Querfördereinrichtung (11), wobei
   die Querfördereinrichtung (11) eine Vielzahl von einen Querförderer (16) bildenden Aufnahmeelementen (15) zur Einzelaufnahme der überführten Fische umfasst und in einem Übergabebereich (17) eine Anzahl m von mindestens zwei jeweils äquidistant beabstandeten Abgabeeinrichtungen (18) zum Überführen der Fische in die Aufnahmeelemente (15) angeordnet sind, deren mittlerer Abstand mindestens der Breite einer Anzahl n von mindestens zwei der Aufnahmeelemente (15) entspricht, umfassend die Schritte:

- Zuführen einer Anzahl m von mindestens zwei der Fische durch Fördern der Fische in Längsrichtung an die jeweiligen Abgabeeinrichtungen (18),
- kontinuierliches Fördern der Aufnahmeelemente (15) in eine Querförderrichtung,
- zeitgleiches Überführen der in den Abgabeeinrichtungen (18) vorgehaltenen Fische in die sich in einer Übergabeposition befindenden Aufnahmeelemente (15) zu vorgegebenen Übergabezeitpunkten,

wobei ein Fördertakt die Zeitspanne umfasst, um die Aufnahmeelemente (15) um die Breite eines der Aufnahmeelemente (15) zu fördern, und wobei das Überführen zyklisch intermittierend ausgeführt wird, in dem der zeitliche Abstand zwischen jeweils aufeinanderfolgenden Übergabezeitpunkten mindestens n+1 Fördertakte beträgt.

8. Verfahren nach Anspruch 7, **dadurch gekennzeichnet, dass** das Überführen alternierend mit einem ersten zeitlichen Abstand und einem zweiten zeitlichen Abstand zwischen jeweils aufeinanderfolgenden der Übergabezeitpunkte ausgeführt wird, wobei der erste zeitliche Abstand n+1 Fördertakte (20) und der zweite zeitliche Abstand n·(m-1)-1 Fördertakte (20) beträgt.

9. Verfahren nach einem der vorangehenden Ansprüche 7 und 8, umfassend die folgenden weiteren Schritte:

- Bestimmen der Position mindestens eines der Aufnahmeelemente (15),
- Ermitteln des Zeitvorlaufs zum Beschleunigen der in den Abgabevorrichtungen (18) vorgehaltenen Fische auf Basis der Position des Aufnahmeelementes (15),
- Beschleunigen der vorgehaltenen Fische unter Berücksichtigung des Zeitvorlaufs derart, dass diese zu dem jeweiligen Übergabezeitpunkt eine vorgegebene Auswurfgeschwindigkeit erreichen.

10. Verfahren nach Anspruch 9, **dadurch gekennzeichnet, dass** das Beschleunigen der vorgehaltenen Fische mittels eines vorgegebenen Beschleunigungsprofils erfolgt.

11. Verfahren nach Anspruch 10, **dadurch gekennzeichnet, dass** der zeitliche Verlauf des Beschleunigungsprofils vom Beginn des Beschleunigens der vorgehaltenen Fische bis zum Erreichen der Auswurfgeschwindigkeit monoton oder streng monoton steigend ist.

## Claims

1. Apparatus (10) for transferring fish conveyed in the longitudinal direction to a transverse conveying device (11),

wherein the transverse conveying device (11) comprises a plurality of receiving elements (15) forming a transverse conveyor (16) for individually receiving the transferred fish as well as a drive means arranged on said transverse conveyor (16) for continuously conveying the receiving elements (15), and a number m of at least two dispensing devices (18) each equidistantly spaced for transferring the fish into the receiving elements (15) are arranged in a transfer area (17), the mean gap of which corresponds to at least the width of a number n of at least two of the receiving elements (15),

further comprising

feeding devices (19) assigned to each of the dispensing devices (18), said feeding devices being designed and configured for feeding the fish to the dispensing devices (18) in the longitudinal direction, and

a control device connected to the drive means and the dispensing devices (18), wherein the control device is designed and configured for operating the dispensing devices (18) in such a manner that the fish held available in the dispensing devices (18) are transferred into the receiving elements (15) located in a transfer position simultaneously at specified transfer times, wherein transferring by means of the control device is carried out cyclically and intermittently in that the time gap between any two successive transfer times is at least n+1 feeding cycles (20) in each case, wherein a feeding cycle (20) comprises the time period required to convey the receiving elements (15) by the width of one of said receiving elements (15).

2. Apparatus according to claim 1, **characterized in that** the control device for operating the dispensing devices (18) comprise a first clock generator and a second clock generator which are designed and configured in such a manner that transferring is carried out alternately with a first time gap and a second time gap between successive transfer times in each case, wherein the first clock generator is adapted to specify the first time gap as n+1 feeding cycles (20) and the second clock generator is adapted to specify the second time gap as n•(m-1)-1 feeding cycles (20).

3. Apparatus according to one of the preceding claims, **characterized in that** the dispensing devices (18) comprise acceleration units (21) for accelerating the fish held available, and

the control device is connected to at least one position generator for defining the position of at least one of the receiving elements (15), and further comprises control means which are designed and configured to determine the timing advance for accelerating the fish held available in the dispensing devices (18) by means of the acceleration units based on the position of the receiving element (15), and that

the control device comprises an acceleration control device which is connected to the acceleration units and operates them in such a manner that the fish held available are accelerated, taking the timing advance into account, and achieve a specified ejection speed at the relevant transfer time.

4. Apparatus according to one of the preceding claims, **characterized in that** a specified acceleration profile is stored in the acceleration control device and the acceleration control device is configured to operate the acceleration units according to said specified acceleration profile.

5. Apparatus according to claim 4, **characterized in that** the time curve of the acceleration profile from the commencement of acceleration of the fish held available up to reaching the ejection speed is monotonically or strictly monotonically increasing.

6. Apparatus for transferring fish into a fish processing machine (12), comprising a feeding device for feeding a plurality of unsorted fish, means (14) for longitudinal orientation of the fish and for transferring the fish transported in the longitudinal direction, an apparatus (10) for transferring the fish conveyed in the longitudinal direction to a transverse conveying device (11) according to any one of claims 1 to 5, wherein said transverse conveying device (11) forms the fish feed of the fish processing machine (12).

7. Method for transferring fish conveyed in the longitudinal direction to a transverse conveying device (11), wherein

the transverse conveying device (11) comprises a plurality of receiving elements (15) forming a transverse conveyor (16) for individually receiving the transferred fish, and a number m of at least two dispensing devices (18) each equidistantly spaced for transferring the fish into the receiving elements (15) are arranged in a transfer area (17), the mean gap of which corresponds to at least the width of a number n of at least two of the receiving elements (15),

comprising the steps:

- Feeding of a number m of at least two of the fish by conveying the fish in the longitudinal direction to the relevant dispensing devices (18),
- Continuous conveying of the receiving elements (15) in a transverse conveying direction,
- Simultaneous transferring of the fish held available in the dispensing devices (18) into the receiving elements (15) located in a transfer position at specified transfer times, wherein a feeding cycle comprises the time period required to convey the receiving elements (15) by the width of one of the receiving elements (15), and wherein

the transferring is carried out cyclically and intermittently in that the time gap between any two successive transfer times is at least n+1 feeding cycles.

8. Method according to claim 7, **characterized in that** the transferring is carried out alternately with a first time gap and a second time gap between successive transfer times in each case, wherein the first time gap is n+1 feeding cycles (20) and the second time gap is n•(m-1)-1 feeding cycles (20).

9. Method according to any one of the preceding claims 7 and 8 comprising the following further steps:

- Defining the position of at least one of the receiving elements (15),
- Determining the timing advance for accelerating the fish held available in the dispensing devices (18) based on the position of the receiving element (15),
- Accelerating the fish held available taking the timing advance into account in such a manner that they achieve a specified ejection speed at the relevant transfer time.

10. Method according to claim 9, **characterized in that** accelerating of the fish held available takes place by means of a specified acceleration profile.

11. Method according to claim 10, **characterized in that** the time curve of the acceleration profile from the commencement of acceleration of the fish held available up to reaching the ejection speed is monotonically or strictly monotonically increasing.

**Revendications**

1. Un dispositif (10) pour le transfert de poissons transportés en direction longitudinale vers un dispositif de convoyage transversal (11),

dans lequel le dispositif de convoyage transversal (11) comprend plusieurs éléments récepteurs (15) formant un transporteur transversal (16) pour la réception individuelle des poisons transférés ainsi qu'un moyen d'entraînement agencé sur le transporteur transversal (16) pour assurer le transport continu des éléments collecteurs (15), et

dans une zone de transfert (17) un nombre m d'au moins deux dispositifs de déchargement (18) espacés respectivement de façon équidistante pour assurer le transfert des poissons se trouvant dans les éléments récepteurs (15), et dont l'écart moyen correspond au moins à la largeur d'un nombre n d'au moins deux des éléments récepteurs (15), comprenant par ailleurs

des dispositifs d'alimentation (19) assignés à chacun des dispositifs de déchargement (18), conçus et configurés de façon à assurer le transfert en direction longitudinale jusqu'au dispositif de déchargement (18), et

un dispositif de commande connecté au moyen d'entraînement et aux dispositifs de déchargement (18), dans lequel le dispositif de commande des dispositifs de déchargement (18) est conçu et configuré de façon à ce que les poissons se trouvant dans le dispositif de déchargement (18) soient transférés simultanément dans un élément récepteur (15) se trouvant dans une position de transfert à des moments de transfert prédéfinis, dans lequel le transfert par l'intermédiaire du dispositif de commande est réalisé de façon cyclique et intermittente, où l'écart temporel entre deux moments de transfert successifs quelconques est égal à au moins n+1 cycles d'alimentation (20), dans lequel le cycle d'alimentation (20) comprend la plage de temps nécessaire au transport des éléments récepteurs (15) sur la largeur de l'un desdits éléments récepteurs (15).

2. Un dispositif selon la revendication 1, **caractérisé en ce que** les dispositifs de commande des dispositifs de déchargement (18) comprennent un premier générateur de rythme et un second générateur de rythme, conçus et configurés de façon à ce que le transfert soit réalisé alternativement selon un premier écart temporel et un second écart temporel entre deux moments de transfert successifs respectifs, dans lequel le premier générateur de rythme est adapté de façon à spécifier le premier écart temporel comme n+1 cycles d'alimentation (20) et le second générateur de rythme est adapté de façon à spécifier le second écart temporel comme $n \cdot (m-1)-1$ cycles d'alimentation (20).

3. Un dispositif selon l'une des revendications précédentes, **caractérisé en ce que** les dispositifs de déchargement (18) comprennent des unités d'accélération (21) pour accélérer le poisson conservé et

le dispositif de commande est connecté à au moins un capteur de position permettant de déterminer la position d'au moins l'un des éléments récepteurs (15), et par ailleurs

comprennent des moyens de commande conçus et configurés pour déterminer l'avance temporelle pour accélérer les poissons contenus dans les dispositifs de déchargement (18) à l'aide des unités d'accélération, en se basant sur la position des éléments récepteurs (15), et **en ce que**

le dispositif de commande comprend un dispositif de commande d'accélération connecté aux unités d'accélération, activant ces dernières de façon à ce que les poissons conservés soient accélérés en tenant compte de l'avance temporelle et atteignent une vitesse de déchargement prédéfinie au moment de transfert respectif.

4. Un dispositif selon l'une des revendications précédentes, **caractérisé en ce qu'**un profil d'accélération prédéfini est enregistré dans le dispositif de commande d'accélération, et **en ce que** le dispositif de commande d'accélération est configuré de façon à activer les unités d'accélération en fonction du profil d'accélération prédéfini.

5. Un dispositif selon la revendication 4, **caractérisé en ce que** l'évolution temporelle du profil d'accélération, du début de l'accélération du poisson contenu jusqu'à atteindre la vitesse de déchargement, connaît une croissance monotone ou fortement monotone.

6. Un dispositif de transfert des poissons dans une machine de traitement des poissons (12), comprenant un moyen de transport pour le transport de plusieurs poissons non triés, un moyen (14) d'alignement longitudinal des poissons et de transport des poissons en direction longitudinale, un dispositif (10) de transfert des poissons transportés en direction longitudinale vers un dispositif de convoyage transversal (11) selon l'une des revendications 1 à 5, dans lequel le dispositif de convoyage transversal (11) constitue l'alimentation en poissons de la machine de traitement des poissons (12).

7. Un procédé de transfert de poissons transportés en direction longitudinale vers un dispositif de convoyage transversal (11), dans lequel

le dispositif de convoyage transversal (11) comprend plusieurs éléments récepteurs (15) formant un transporteur transversal (16) pour la réception individuelle des poisons transférés, et dans une zone de transfert (17) un nombre m d'au moins deux dispositifs de déchargement (18) espacés respectivement de façon équidistante pour assurer le transfert des poissons se trouvant dans les éléments récepteurs (15), et dont l'écart moyen correspond au moins à la largeur d'un nombre n d'au moins deux des éléments récepteurs (15), comprenant les étapes :

- Transfert d'un nombre m d'au moins deux poissons par le transport des poissons en direction longitudinale vers les dispositifs de déchargement (18) respectifs,
- Transport continu des éléments récepteurs (15) dans une direction transversale,
- Transfert simultané des poissons contenus dans le dispositif de déchargement (18) dans les éléments récepteurs (15) se trouvant dans une position de transfert à des moments de transfert prédéfinis,

dans lequel un cycle d'alimentation comprend la plage de temps nécessaire au transport des éléments récepteurs (15) sur la largeur de l'un desdits éléments récepteurs (15), et dans lequel le transfert est réalisé de façon cyclique et intermittente, où l'écart temporel entre deux moments de transfert successifs quelconques est égal à au moins n+1 cycles d'alimentation.

8. Un procédé selon la revendication 7, **caractérisé en ce que** le transfert est réalisé alternativement selon un premier écart temporel et un second écart temporel entre deux moments de transfert successifs respectifs, dans lequel le premier écart temporel représente n+1 cycles d'alimentation (20) et le second écart temporel n·(m-1)-1 cycles d'alimentation (20).

9. Un procédé selon l'une des revendications précédentes 7 et 8 comprenant les étapes supplémentaires suivantes :

- détermination de la position d'au moins l'un des éléments récepteurs (15),
- détermination de l'avance temporelle pour accélérer les poissons contenus dans les dispositifs de déchargement (18), en se basant sur la position des éléments récepteurs (15),
- accélération des poissons conservés et tenant compte de l'avance temporelle, de façon à ce qu'ils atteignent une vitesse de déchargement prédéfinie au moment de transfert respectif.

10. Un procédé selon la revendication 9, **caractérisé en ce que** l'accélération des poissons conservés soit réalisée à l'aide d'un profil d'accélération prédéfini.

11. Un procédé selon la revendication 10, **caractérisé en ce que** l'évolution temporelle du profil d'accélération, du début de l'accélération du poisson contenu jusqu'à atteindre la vitesse de déchargement, connaît une croissance monotone ou fortement monotone.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19511489 A1

- EP 0384956 A2